Europäisches Patentamt

European Patent Office

Office européen des brevets

(11) Numéro de publication: **0 331 545**
**A1**

## (12) DEMANDE DE BREVET EUROPEEN

(21) Numéro de dépôt: **89400367.2**

(22) Date de dépôt: **09.02.89**

(51) Int. Cl.⁴: **G 01 C 21/20**
**G 06 G 1/00, G 06 G 1/08**

(30) Priorité: **01.03.88 FR 8802528**

(43) Date de publication de la demande:
**06.09.89 Bulletin 89/36**

(84) Etats contractants désignés: **DE FR GB**

(71) Demandeur: **Poirier, Alain**
**16, Boulevard Flandrin**
**F-75116 Paris (FR)**

(72) Inventeur: **Poirier, Alain**
**16, Boulevard Flandrin**
**F-75116 Paris (FR)**

(74) Mandataire: **Marquer, Francis et al**
**Cabinet Moutard 35, Avenue Victor Hugo**
**F-78960 Voisins le Bretonneux (FR)**

(54) Procédé et dispositif pour la détermination du cap avec vent (ou avec courant) d'un véhicule aérien (ou nautique).

(57) Le dispositif selon l'invention fait intervenir un élément de support comprenant deux roses des vents coaxiales, dont l'une (102) est affectée au cap sans vent et l'autre (104) sert à l'indication du cap avec vent, ainsi qu'une pluralité de couronnes (105) pouvant se monter rotatives coaxialement auxdites roses des vents (102...104) et dans l'espace coronal compris entre celles-ci. Chacune des couronnes (105) correspond à une situation particulière de l'aérodyne déterminée par un rapport vitesse vent/vitesse propre de l'aérodyne et présente un index (106) destiné à être orienté selon le gisement du vent. Une série de traits (107) assure la correspondance entre les roses des vents (102 et 104).

L'invention permet de simplifier considérablement la détermination du cap avec vent d'un aérodyne.

Bundesdruckerei Berlin

**Description**

## PROCEDE ET DISPOSITIF POUR LA DETERMINATION DU CAP AVEC VENT (OU AVEC COURANT) D'UN VEHICULE AERIEN (OU NAUTIQUE).

La présente invention concerne un procédé et un dispositif pour la détermination du cap avec vent (ou avec courant) d'un véhicule aérien (ou nautique) et éventuellement, du temps estimé avec vent (ou avec courant) que doit mettre ce véhicule pour parcourir un trajet compris entre deux repères géographiques, cette détermination étant effectuée à partir du cap sans vent (ou sans courant) et du temps estimé sans vent (ou sans courant).

On rappelle tout d'abord que le cap sans vent (ou sans courant) est le cap que suivrait le véhicule en l'absence de vent (ou de courant). Pour pouvoir effectuer la même route en présence de vent (ou de courant), le véhicule doit effectuer une correction de dérive et suivre un cap fictif appelé cap avec vent (ou avec courant). Le temps estimé sans vent (ou sans courant), une fois corrigé en fonction du vent (ou du courant), conduit au temps estimé avec vent (ou avec courant).

Traditionnellement, la détermination du cap et du temps avec vent (ou avec courant) fait appel, soit à un calcul mental, soit à une construction géométrique, soit à l'utilisation d'un abaque ou d'une calculatrice. Il s'avère cependant que ces méthodes, qui doivent être souvent appliquées par le pilote au cours du pilotage, sont particulièrement incommodes. Elles nécessitent une charge de travail, font habituellement appel à des manipulations et comportent des risques d'erreur.

L'invention a donc plus particulièrement pour but de réduire ces inconvénients en simplifiant au maximum les susdites déterminations.

Elle part de la constatation que les corrections de dérive et de temps estimé sont effectuées par compositions vectorielles dans lesquelles les angles ne dépendent pas de la valeur absolue des grandeurs vectorielles mais de leur valeur relative, chaque grandeur pouvant être divisée par la vitesse propre du véhicule (vitesse par rapport à l'air (ou par rapport au courant)).

Cette propriété permet de faire apparaître le rapport entre la vitesse du vent (ou du courant) et la vitesse propre du véhicule, rapport qui permet de définir une situation du véhicule à laquelle correspond une correction de dérive déterminée, pour chaque position relative du véhicule et du vent (ou du courant).

A partir de la valeur de ce rapport, la situation du véhicule peut être déterminée grâce à une table de correspondance ou même d'un abaque présentant en coordonnées les valeurs successives de la vitesse propre du véhicule et de la vitesse du vent (ou du courant) et une série de courbes indiquant chacune une situation préétablie du véhicule.

Du fait que l'on peut connaître la vitesse du vent (ou du courant), grâce à des informations météorologiques ou de cartes maritimes, et la vitesse propre du véhicule, cette détermination peut être effectuée juste avant le vol (ou la course en mer) ou pendant le vol (ou la course en mer).

Une fois que le choix de la situation a été déterminé, la correction de dérive est fonction de la position relative du cap sans vent (ou sans courant) du véhicule et de la direction du vent (ou du courant) et uniquement de celle-ci : à une position relative correspond une correction de dérive et une seule.

Le Demandeur a démontré qu'il était possible, pour éviter le calcul du cap avec vent (ou avec courant), en ajoutant au cap sans vent (ou sans courant) la correction de dérive, d'utiliser un système de correspondance associant à un cap sans vent (ou sans courant) un cap avec vent (ou avec courant), sans expliciter la correction.

Le procédé selon l'invention se base sur ces constatations et comprend donc les phases opératoires suivantes :

- la détermination d'une situation du véhicule correspondant à la valeur du rapport vitesse vent (ou courant)/vitesse propre du véhicule, à l'aide d'une première table de correspondance préétablie ; et

- la construction géométrique d'une somme vectorielle entre un premier vecteur unitaire orienté selon le cap sans vent (ou sans courant), et d'un second vecteur défini, en module et en sens, à l'aide d'une seconde table de correspondance, en fonction de ladite situation et du gisement du vent (ou du courant), le vecteur résultant de cette somme vectorielle indiquant alors le cap avec vent (ou avec courant) du véhicule.

Avantageusement, la susdite seconde table de correspondance fournira en outre une grandeur représentative d'une correction, par exemple en pourcentage, du temps que mettra le véhicule pour effectuer son trajet.

Pour effectuer la mise en oeuvre du procédé précédemment défini, l'invention propose un dispositif faisant interve nir un élément de support comprenant deux roses des vents coaxiales, dont l'une est affectée au cap sans vent (ou sans courant) et l'autre sert à l'indication du cap avec vent (ou avec courant), ainsi qu'une pluralité de couronnes pouvant se monter rotatives coaxialement auxdites roses des vents et dans l'espace coronal compris entre celles-ci, chacune de ces couronnes correspondant à une situation particulière du véhicule, déterminée par un rapport vitesse vent (ou courant)/vitesse du véhicule, et présentant un index destiné à être orienté selon le gisement du vent (ou du courant) ainsi qu'une série de traits établis de manière à assurer la correspondance entre la rose des vents correspondant au cap sans vent (ou sans courant) et la rose des vents correspondant au cap avec vent (ou avec courant).

En outre, à chacun des susdits traits pourra être affectée une valeur, par exemple en pourcentage, représentative de la correction de temps à apporter.

Il est clair que grâce à ce dispositif, une fois la couronne déterminée et montée sur le support, avec l'index correctement orienté selon le gisement du vent (opérations qui peuvent être exécutées juste avant le départ), aucune opération ou manipulation n'est plus nécessaire, l'opérateur pouvant lire directement, en regard du cap sans vent (ou sans courant), le cap avec vent (ou avec courant) et la correction de temps estimé, et ce, quel que soit le cap sans vent.

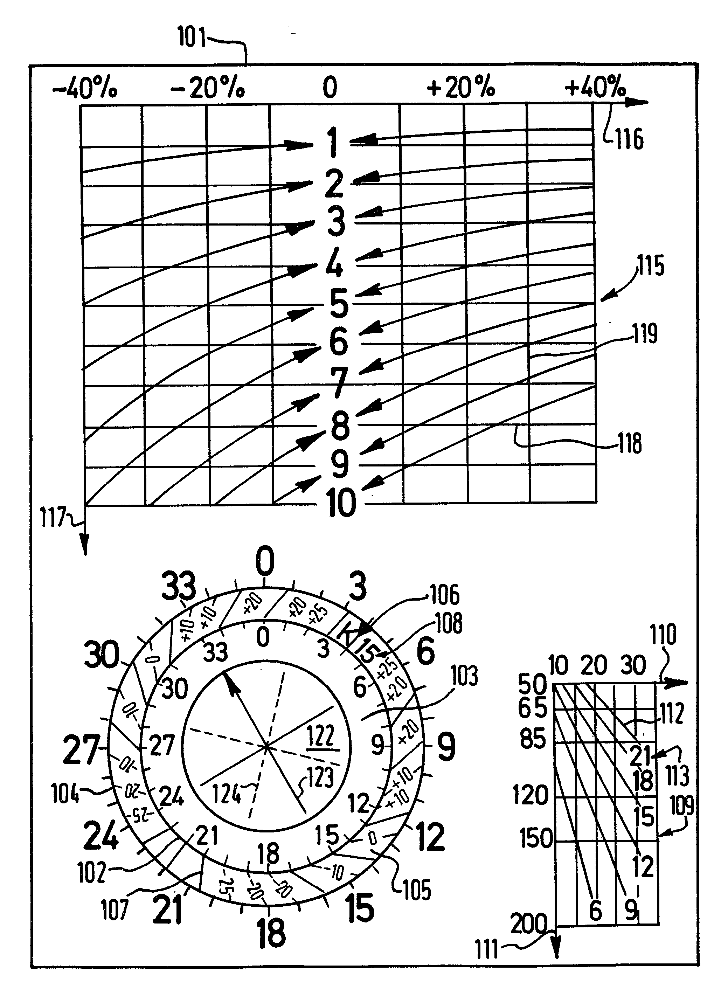

Un mode de réalisation de ce dispositif sera décrit ci-après, à titre d'exemple non limitatif, avec référence au dessin annexé dans lequel :

La figure unique est une vue de face d'un dispositif selon l'invention incluant en outre un abaque de détermination du rapport vitesse vent/vitesse propre d'un aérodyne et un abaque de détermination du temps estimé avec vent.

Tel que représenté sur ce dessin, le dispositif comprend tout d'abord un support plan 101 tel que, par exemple, une feuille en matière plastique transparente de forme rectangulaire, dont la face supérieure est dépolie de manière à permettre l'écriture au crayon et l'effaçage à la gomme.

Sur ce support sont inscrits deux cercles coaxiaux de différents diamètres, associés à deux roses des vents respectives, à savoir :
- un premier cercle 102 délimitant un disque 103 gradué de 0 à 33 (0 à 360°) selon une première rose des vents affectée au cap sans vent, et
- un deuxième cercle 104, de diamètre plus important, gradué de 0 à 33 (0 à 360°) selon une deuxième rose des vents destinée à la lecture du cap avec vent.

Entre ces deux cercles est montée rotative une couronne coaxiale 105 de faible épaisseur qui comporte, d'une part, un repère 106 permettant son orientation selon le gisement du vent et, d'autre part, une série de traits 107 destinés à établir une relation entre les deux roses des vents. A chacun de ces traits 107 sont en outre affectées des indications de correction du temps estimé, affecté d'un signe. Ces indications sont exprimées en pourcentage et/ou en secondes perdues ou gagnées par minute.

La couronne 105 fait partie d'un jeu de couronnes pouvant se monter de façon amovible sur le support 101, chacune de ces couronnes correspondant à un rapport déterminé entre la vitesse du vent et celle de l'aérodyne, et étant identifiée par un nombre guide 108 défini par le produit du facteur de base (temps en minutes pour parcourir un mille nautique) par la vitesse du vent exprimée en noeuds.

Avantageusement, ces couronnes 105 pourront être empilées autour du disque et être maintenues sur le support 101 par un dispositif (non représenté) conçu de manière à pouvoir les retirer ou les fixer tout en permettant leur rotation ainsi que leur maintien dans la position choisie.

Dans cet exemple, sur le support 101, est également inscrit un abaque 109 portant en abscisse 110, la vitesse du vent en noeuds et en ordonnée 111, la vitesse de l'aéronef selon les unités habituelles (par exemple en noeuds ou en km/h) ; une série de traits 112 reliant les points correspondant au même rapport (vitesse vent/vitesse de l'aérodyne) exprime le nombre guide 113 qui servira à désigner la couronne 105 à utiliser (dans cet exemple, la couronne utilisée porte le nombre guide 15).

Un second abaque 115 également inscrit sur le support 101 porte en abscisse 116 les pourcentages de correction (8) (qui correspondent à ceux indiqués sur la couronne 105) et en ordonnées 117 des temps de vol estimés ; des traits 118 relient les points correspondant au même temps de vol.

La lecture du temps de vol estimé avec vent s'obtient alors selon la procédure suivante :
- la détermination du trait 118 correspondant au temps de vol estimé sans vent, à l'aide de la graduation portée en ordonnée 117 ;
- la détermination de l'intersection de ce trait avec la ligne de pourcentage de correction 119 (échelle portée en abscisse) qui correspond au pourcentage lu sur la couronne 105 ;
- la lecture sur la graduation portée en ordonnée, de la valeur située au même niveau que ladite intersection, cette valeur étant représentative du temps estimé avec vent.

Le dispositif précédemment décrit peut en outre comprendre, comme représenté, un petit disque 122 monté rotatif sur le support 101 coaxialement à la couronne 105, et portant un premier .système de coordonnées rectangulaires 123 dont l'un des axes est muni d'un repère et un deuxième système de coordonnées 124, en traits interrompus, dont les deux axes s'étendent respectivement selon les bissectrices du premier repère 123. Ce disque 122, qui est monté sur le support 101 avec frottement sec, est plus particulièrement destiné à faciliter les procédures de prise de terrain.

L'invention ne se limite pas au mode d'exécution précédemment décrit.

Ainsi, selon une variante, ce dispositif pourrait comprendre des moyens permettant la lecture du cap avec vent, selon deux vitesses du véhicule, par exemple une vitesse de croisière et une vitesse d'approche.

Ces moyens pourraient alors faire intervenir, sur le même support, deux systèmes de double rose des vents indépendants, admettant le même jeu de couronnes, chaque couronne correspondant à un seul nombre guide.

Avantageusement, chaque couronne pourra porter, sur chacune de ses faces, des repères pour déterminer le cap avec vent. Sur l'une de ces faces, les corrections de temps pourront être exprimées en pourcentage de correction et seront alors destinées aux vitesses de croisière, et sur l'autre face, ces corrections seront exprimées en temps (ou secondes) perdu ou gagné par minute, ces corrections étant destinées aux vitesses d'approche.

Il apparaît clairement que, tel que précédemment décrit, le dispositif selon l'invention offre, pour un coût relativement modéré, une aide appréciable à la navigation aérienne (avions, hélicoptères, ultra légers motorisés).

Bien entendu, moyennant une simple adaptation évidente à l'homme de l'art, ce dispositif est utilisable pour la détermination du cap avec courant d'un véhicule nautique (la notion de vent étant alors remplacée par la notion de courant).

## Revendications

1. Procédé pour la détermination du cap avec vent (ou avec courant) d'un véhicule aérien ou nautique, ce procédé comprenant la détermination d'une situation du véhicule correspondant à la valeur du rapport vitesse vent (ou courant)/vitesse propre du véhicule et la détermination du cap avec vent (ou avec courant), à partir du cap sans vent (ou sans courant) et d'une valeur corrective établie pour ladite situation, caractérisé en ce qu'il consiste à réaliser par composition vectorielle la somme d'un premier vecteur unitaire orienté selon le cap sans vent (ou sans courant) et d'un second vecteur défini, en module, en direction et en sens, à l'aide d'une table de correspondance (couronne 105), en fonction de ladite situation et de la direction du vent (ou du courant), cette table de correspondance étant établie de manière à ce que le vecteur résultant de cette somme vectorielle indique directement le cap avec vent (ou avec courant) du véhicule par rapport au cap sans vent (ou sans courant).

2. Procédé selon la revendication 1, caractérisé en ce que la susdite seconde table de correspondance (105) fournit en outre une grandeur représentative d'une correction de temps à apporter au temps que mettrait le véhicule pour effectuer son trajet en l'absence de vent (ou de courant).

3. Dispositif pour la mise en oeuvre du procédé selon l'une des revendications 1 et 2, caractérisé en ce qu'il fait intervenir un élément de support comprenant deux roses des vents coaxiales, dont l'une (102) est affectée au cap sans vent (ou sans courant) et l'autre (104) sert à l'indication du cap avec vent (ou avec courant), ainsi qu'une pluralité de couronnes (105) pouvant se monter rotatives coaxialement auxdites roses des vents (102, 104) et dans l'espace coronal compris entre celles-ci, chacune de ces couronnes (105) correspondant à une situation particulière du véhicule déterminée par un rapport vitesse vent (ou courant)/vitesse du véhicule, et présentant un index (106) destiné à être orienté selon le gisement du vent (ou du courant) ainsi qu'une série de traits (107) établis de manière à assurer la correspondance entre la rose des vents correspondant au cap sans vent (ou sans courant) (102) et la rose des vents correspondant au cap avec vent (ou avec courant) (103).

4. Dispositif selon la revendication 3, caractérisé en ce que les susdites couronnes (105) portent des indications relatives à des corrections de temps à apporter au temps que mettrait le véhicule pour effectuer son trajet en l'absence de vent (ou de courant), ces indications étant associées à au moins une partie des susdits traits (107).

5. Dispositif selon l'une des revendications 3 et 4, caractérisé en ce qu'il comprend des moyens permettant d'empiler les susdites couronnes (105) coaxialement aux susdites roses des vents et de les maintenir sur le susdit support (101), de manière à pouvoir les retirer ou les fixer tout en permettant leur rotation ainsi que leur maintien dans la position choisie.

6. Dispositif selon l'une des revendications 3 à 5, caractérisé en ce qu'à chacune des couronnes (105) est affecté un nombre guide (108) qui consiste en le produit d'un facteur de base (temps en minutes pour parcourir un mille nautique) par la vitesse du vent (ou du courant) exprimée en noeuds.

7. Dispositif selon l'une des revendications 3 à 6, caractérisé en ce que le susdit support (101) comporte un premier abaque (109) permettant de déterminer le susdit nombre guide et donc la couronne correspondante (105) en fonction de la vitesse du vent (ou du courant) et de la vitesse du véhicule.

8. Dispositif selon l'une des revendications 3 à 7, caractérisé en ce que le susdit support comporte un second abaque (115) permettant de déterminer le temps du trajet du véhicule estimé avec vent (ou avec courant) en fonction du temps du trajet estimé sans vent (ou sans courant) et des valeurs correctives indiquées sur les susdites couronnes (105).

9. Dispositif selon l'une des revendications 3 à 8, caractérisé en ce qu'il comporte en outre un petit disque (122) coaxial aux susdites roses des vents sur lequel est indiqué un repère comprenant deux axes perpendiculaires (123) ainsi que leurs bissectrices (124).

10. Dispositif selon l'une des revendications 3 à 8, caractérisé en ce qu'il comprend, sur un même support (101), deux ensembles de détermination de cap avec vent (ou avec courant) et de correction de temps, ces deux ensembles comportant chacun deux roses des vents et des moyens permettant un montage rotatif coaxial de couronne (105) appartenant à un même jeu, ces deux ensembles étant respectivement affectés à deux vitesses différentes du véhicule.

EP 0 331 545 A1

# Office européen des brevets

# RAPPORT DE RECHERCHE EUROPEENNE

Numero de la demande

EP 89 40 0367

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 16 900 (HILL)(A.D. 1909) <br> * Figure 1; page 2, lignes 20-51 * <br> --- | 1 | G 01 C 21/20 <br> G 06 G 1/00 <br> C 06 G 1/08 |
| A | FR-A-2 289 007 (DESTAILLEUR) <br> * Figure 1; revendications 1,2 * <br> ----- | 1,3 | |

### DOMAINES TECHNIQUES RECHERCHES (Int. Cl.4)

G 01 C
G 06 G

**Le présent rapport a été établi pour toutes les revendications**

| Lieu de la recherche | Date d'achèvement de la recherche | Examinateur |
|---|---|---|
| LA HAYE | 30-05-1989 | KOLBE W.H. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)